# EUROPÄISCHE PATENTSCHRIFT

(11) **EP 3 853 518 B1**
(45) Veröffentlichungstag und Bekanntmachung des Hinweises auf die Patenterteilung: **29.11.2023**
(21) Anmeldenummer: 19773759.6
(22) Anmeldetag: 17.09.2019
(51) Int. Cl.: F21S 43/14, F21S 43/15, F21S 43/239, F21S 43/245, F21S 43/249, F21S 43/19, F21S 43/30, F21S 43/37, F21S 43/40, F21S 43/50, F21V 8/00

(54) **LICHTMODUL, INSBESONDERE ZUR VERWENDUNG IN EINER BELEUCHTUNGSVORRICHTUNG FÜR EIN KRAFTFAHRZEUG**
LIGHT MODULE, IN PARTICULAR FOR USE IN A LIGHTING DEVICE FOR A MOTOR VEHICLE
MODULE D'ÉCLAIRAGE, NOTAMMENT DESTINÉ À ÊTRE UTILISÉ DANS UN DISPOSITIF D'ÉCLAIRAGE POUR VÉHICULE AUTOMOBILE

(30) Priorität: 19.09.2018 DE 102018215988
(43) Veröffentlichungstag der Anmeldung: 28.07.2021
(73) Patentinhaber: Volkswagen AG, 38440 Wolfsburg (DE)
(72) Erfinder: HANS, Sebastian, 38446 Wolfsburg (DE); STUDENY, Christian, 38104 Braunschweig (DE)
(86) Internationale Anmeldenummer: PCT/EP2019/074788
(87) Internationale Veröffentlichungsnummer: WO 2020/058236

(56) Entgegenhaltungen:
- EP-A1- 2 428 724
- EP-A1- 3 211 298
- EP-A2- 1 391 755
- WO-A1-2015/075668
- WO-A1-2017/213484
- DE-A1-102014 110 225
- DE-T5-112016 000 952
- GB-A- 2 544 896
- JP-A- 2013 058 396
- US-A1- 2011 216 549
- US-A1- 2013 336 004

## Beschreibung

Die Erfindung betrifft eine Lichteinheit zur Verwendung in einer Beleuchtungsvorrichtung für ein Kraftfahrzeug mit den Merkmalen vom Oberbegriff des Patentanspruchs 1.

Eine derartige Lichteinheit ist aus der EP 3 211 298 A1 bekannt. Konkret wird eine Lichteinheit mit einem Lichtmodul für ein Fahrzeug offenbart, welches ein Gehäuse aufweist, in dem ein als Lichtleiter ausgebildeter Lichtkörper aufgenommen ist. In dem Lichtmodul sind Lichtquellen integriert, über die Lichtstrahlen in Seitenflächen des Lichtkörpers eingekoppelt und über eine Auskoppelstruktur in Richtung einer Lichtscheibe auskoppelbar sind. Der Lichtkörper wird von einem reflektierenden Rahmen umrahmt, der in Lichtaustrittsrichtung eine Lichtaustrittsöffnung begrenzt.

In der WO 2017/213484 A1 wird eine Hintergrundbeleuchtungseinheit für den Außenspiegel eines Kraftfahrzeugs beschrieben. Die Hintergrundbeleuchtungseinheit weist ein Gehäuse mit einer Rückwand und einem der Rückwand gegenüberliegenden Fenster auf. Das Gehäuse hat eine Seitenöffnung, in das eine gestapelte Baugruppe eingeschoben werden kann. Die Baugruppe umfasst auch einen flächigen Lichtkörper. Nach dem Einschieben der Baugruppe in das Gehäuse wird die Seitenöffnung durch eine Leiterplatte mit einer LED sowie mit Dichtungsmaterial verschlossen.

Der US 2011/216549 A1 ist eine Lichteinheit für ein Kraftfahrzeug zu entnehmen, welche in eine Beleuchtungsvorrichtung eines Kraftfahrzeugs eingebaut werden kann. Die Lichteinheit umfasst eine LED-Lichtquelle, vor der ein Linsenkörper angeordnet ist. Der Linsenkörper umfasst einen ersten, einen zweiten, einen dritten und einen vierten Linsenteil. Die Linsenteile dienen zum Konvergieren der durch die LED-Lichtquelle ausgesendeten Lichtstrahlen. Der vierte Linsenteil ist als flächiger Lichtleiter ausgebildet, durch den die konvergierten Lichtstrahlen an drei Auskoppelstellen um 90 Grad in Lichtabstrahlrichtung der Lichteinheit ausgekoppelt werden. Mehrere dieser Lichteinheiten können in eine Beleuchtungsvorrichtung mit einem gehäuseartigen Reflektor eingebaut werden. Dabei werden mehrere der Lichteinheiten zunächst an einem Trägerteil montiert und dann von außen in schlitzartige Öffnungen des gehäuseartigen Reflektors geschoben.

Ein weiteres Lichtmodul ist aus der DE 198 60 697 A1 bekannt geworden. Konkret weist das Lichtmodul einen Lichtwellenleiter mit einer Lichtaustrittsfläche auf. Auf der der Lichtaustrittsfläche gegenüberliegenden Oberfläche des Lichtmoduls und auf den die Lichtaustrittsfläche und die gegenüberliegende Oberfläche verbindenden Seitenflächen des Lichtwellenleiters ist eine lichtreflektierende oder diffus rückstreuende Folie angeordnet. Ferner ist an einer der Seitenflächen eine Lichtquelle zum seitlichen Einkoppeln von Licht vorhanden. An der Lichtaustrittsfläche des Lichtwellenleiters ist die Oberfläche mit sich abwechselnden lichtstreuenden und ebenen Flächen versehen. Das Flächenverhältnis der ebenen Flächen zu den lichtstreuenden Flächen ist in Abhängigkeit von der Leuchtdichte an dem jeweiligen Ort des Lichtwellenleiters gewählt. Die Aufbringung der reflektierenden Folie wird praktisch mit der Herstellung des Lichtwellenleiters kombiniert, welcher durch Spritzgießen hergestellt wird. Bei der Herstellung wird die Spritzgussform vorher an der Bodenfläche und mindestens einem Teil der Seitenfläche mit der Folie ausgelegt. Beim Aushärten nach dem Spritzgießen des Kunststoffs haftet die Folie an dem Lichtwellenleiter an.

In der DE 199 02 774 A1 wird ein Leuchtkörper mit Leuchtdioden zur Hinterleuchtung von Hinweiselementen beschrieben. Die Leuchtdioden dienen zur Einbringung von Licht in den Innenraum eines Hohlkörpers, welcher eine lichtabstrahlende Fläche zur Hinterleuchtung der Hinweiselemente besitzt. Der lichtabstrahlenden Fläche gegenüberliegend ist eine Rückwand ausgebildet, welche ebenfalls lichtabstrahlend, selbstleuchtend oder auch lediglich lichtundurchlässig ausgebildet ist. Beide Flächen werden durch lichtundurchlässige oder diffus reflektierende Seitenwände miteinander verbunden. Die Seitenwände weisen Lichteintrittsöffnungen auf, in denen Leuchtdioden oder Enden von Lichtleitern so angeordnet sind, dass diese ihr Licht vollständig in den Hohlraum einspeisen können. Die lichtundurchlässige Wandung der Seitenflächen besteht aus einem mit hohem Reflexionsgrad reflektierenden Material. Die Lichtaustrittsfläche und die gegenüberliegende Fläche bestehen aus lichtstreuendem Material mit einem geringen Absorptionsgrad.

Des Weiteren sei erwähnt, dass bei der Herstellung von Kraftfahrzeug-Beleuchtungsvorrichtungen aus Platzgründen und zur Erzielung bestimmter optischer Effekte oftmals auch der Einsatz von flächigen OLED-Leuchtmitteln (OLED = organische Leuchtdiode) in Erwägung gezogen wird. Allerdings sind OLED-Leuchtmittel teuer und weisen auf Grund ihrer organischen Struktur Nachteile hinsichtlich ihrer Alterungsbeständigkeit und Robustheit auf.

Der vorliegenden Erfindung liegt daher die Aufgabe zu Grunde, eine Lichteinheit bereitzustellen, mit der optisch ein OLED-Leuchtmittel nachempfunden werden kann und welche einfach und kostengünstig aufgebaut ist. Insbesondere soll die Lichteinheit zu einer vereinfachten Montage bei dessen Verwendung in einer Beleuchtungsvorrichtung beitragen.

Vorstehende Aufgabe wird mit durch eine Lichteinheit mit den Merkmalen von Patentanspruch 1 gelöst. Vorteilhafte Ausbildungen beziehungsweise Weiterbildungen der Erfindung sind den abhängigen Ansprüchen zu entnehmen.

Die Erfindung geht aus von einer Lichteineit mit einem Lichtmodul mit wenigstens einem flächigen Lichtkörper und wenigstens einem Leuchtmittel, dessen Lichtstrahlen in eine Seitenfläche des Lichtkörpers, also seitlich einkoppelbar sind oder eingekoppelt werden. Die eingekoppelten Lichtstrahlen können über eine von Seitenflächen des Lichtkörpers umgebene Lichtaustrittsfläche nach außen austreten oder treten über diese aus. Zumindest ein Teil der Seitenflächen und eine der Lichtaustrittsfläche gegenüberliegende, rückseitige Fläche wird durch eine reflektierende oder diffus rückstreuende Abdeckung abgedeckt. *Flächig* im Sinne der Erfindung soll bedeuten, dass der Lichtkörper eine in zwei zueinander senkrecht stehenden Richtungen verlaufende Flächenerstreckung aufweist, die in jeder Richtung um ein Vielfaches größer ist, als eine Dicke des Lichtleiters.

Das Leuchtmittel kann als monochrome, also einfarbiges Licht aussendende LED (LED = lichtemittierende Diode) oder auch als RGB-LED zur Aussendung von Licht beliebiger Farben ausgebildet sein.

Die Abdeckung wird durch ein rahmenartiges Bauteil mit einer Rückwand gebildet. Nach Merkmalen der Erfindung weist eine Seitenwand des rahmenartigen Bauteils eine Öffnung auf, durch die der Lichtkörper in das rahmenartige Bauteil seitlich eingebracht ist. Das wenigstens eine Leuchtmittel ist an der die Öffnung aufweisenden Seitenwand des rahmenartigen Bauteils angeordnet.

Auf diese Weise können zum einen die Flächigkeit und die Homogenität eines OLED-Leuchtmittels nachempfunden werden, zum andern ist ein derartiges Lichtmodul sehr einfach und kostengünstig herstellbar. Auf den Einsatz von zusätzlichen Folien, wie im Stand der Technik anzutreffen ist, kann verzichtet werden.

Gemäß einer ersten Weiterbildung der Erfindung sind im Lichtkörper verteilt lichtstreuende Störstellen angeordnet. Auf diese Weise kann eine gewisse Streuung der in den Lichtkörper eingekoppelten Lichtstrahlen erzielt werden, was zu einer Verbesserung einer homogenen Lichtabstrahlung durch das Lichtmodul führt. Dadurch, dass die lichtstreuenden Störstellen im gesamten Lichtkörper verteilt angeordnet sind und nicht nur an dessen Oberfläche, sind die lichtstreuenden Eigenschaften des Lichtkörpers auch im Alltagsbetrieb des Lichtmoduls, beispielsweise bei Verwendung in einer Kraftfahrzeug-Beleuchtungsvorrichtung, lange Zeit aufrecht erhaltbar.

Zur Erreichung einer besonders guten Homogenität der Lichtabstrahlung weist der Lichtkörper nach weiteren Merkmalen der Erfindung einen Transmissionsgrad (= Lichtdurchlässigkeit) in einem Bereich von etwa 85 Prozent bis etwa 95 Prozent aufweist. Der Lichtkörper wirkt bei Einkopplung von Licht also nur leicht streuend. Besonders bevorzugt weist der Lichtkörper einen Transmissionsgrad von etwa 92 Prozent auf.

Nach einer anderen Ausbildung des Erfindungsgedankens ist das wenigstens eine Leuchtmittel in einem Abstand von der Seitenwand des rahmenartigen Bauteils angeordnet, also damit auch in einem Abstand von der Licht einkoppelnden Seitenfläche des Lichtkörpers. Der Abstand liegt bevorzugt in einem Bereich von etwa 9 Millimeter bis etwa 11 Millimeter, bevorzugt bei einem Wert von etwa 10 Millimetern. Auch hierdurch kann zu einer homogenen Lichtabstrahlung des Lichtmoduls beigetragen werden.

Um eine möglichst große Lichtausbeute und Effektivität des Lichtmoduls herbeizuführen, wird vorgeschlagen, dass zwischen dem wenigstens einen Leuchtmittel und der Seitenwand des rahmenartigen Bauteils wenigstens eine Sammeloptik beziehungsweise Kollimationsoptik angeordnet ist. So können beispielsweise beim Einsatz von Leuchtdioden, die bekanntermaßen einen Öffnungswinkel ihrer Lichtabstrahlung von bis zu 180 Grad aufweisen, auch in seitlichen Bereichen austretende Lichtstrahlen "eingefangen" werden.

Eine andere Weiterbildung der Erfindung schlägt vor, dass das rahmenartige Bauteil über eine Halterung auf einer Platine befestigt ist, welches auch das wenigstens eine Leuchtmittel trägt. Diese Weiterbildung trägt zu einer leichten Montierbarkeit des Lichtmoduls bei.

In diesem Fall ist es sehr zweckmäßig, wenn das rahmenartige Bauteil mit der Halterung verrastet ist. Auf diese Weise lässt sich die Montierbarkeit beziehungsweise Demontierbarkeit des Lichtmoduls optimieren.

Nach einer anderen Ausbildung weist das Lichtmodul mehrere als Leuchtdioden ausgebildete Leuchtmittel auf, welche einen gegenseitigen Abstand zueinander von mehr als 4,5 Millimetern und weniger als 6,5 Millimetern aufweisen. Dies trägt zu einer Homogenität in der Lichtverteilung im Lichtkörper und damit letztendlich zu einer homogenen Lichtabstrahlung des Lichtmoduls bei. Besonders bevorzugt beträgt der gegenseitige Abstand der Leuchtdioden zueinander in etwa 5 Millimeter.

Es kann unter Umständen erwünscht sein, mehrere solcher Lichtmodule in einer Beleuchtungsvorrichtung nebeneinander anzuordnen. Dazu wird für eine leichtere Montage der Beleuchtungsvorrichtung nach weiteren Merkmalen der Erfindung vorgeschlagen, die Lichteinheit aus mehreren Lichtmodulen zu bilden. Bei einer solchen Lichteinheit sind die rahmenartigen Bauteile einerseits und die flächigen Lichtkörper andererseits jeweils einstückig miteinander verbunden. Ferner sind die rahmenartigen Bauteile auf einer solchen gemeinsamen Platine befestigt, die auch die den flächigen Lichtkörpern zugeordneten Leuchtmittel trägt.

Mit der vorliegenden Erfindung soll auch eine Beleuchtungsvorrichtung für ein Kraftfahrzeug unter Schutz gestellt werden, welches wenigstens eine erfindungsgemäße Lichteinheit aufweist.

Schließlich wird auch Schutz begehrt für ein Kraftfahrzeug, welches mit wenigstens einer solchen Beleuchtungsvorrichtung ausgestattet ist.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: eine Explosionsdarstellung eines Lichtmoduls, welches Teil einer Lichteinheit ist,
- Fig. 2: eine Schnittdarstellung gemäß Schnittverlauf II aus Fig. 1,
- Fig. 3: eine Prinzipdarstellung des montierten Lichtmoduls, wobei die Darstellung nicht von der Erfindung umfasst ist,
- Fig. 4: eine Explosionsdarstellung einer aus drei Lichtmodulen bestehenden Lichteinheit, welche vom Gegenstand der Erfindung umfasst ist,
- Fig. 5: eine Schnittdarstellung gemäß Schnittverlauf V aus Fig. 4,
- Fig. 6: eine Darstellung einer Heckleuchte mit erfindungsgemäßen Lichteinheiten und
- Fig. 7: ein Kraftfahrzeug, welches Heckleuchten mit erfindungsgemäßen Lichteinheiten aufweist.

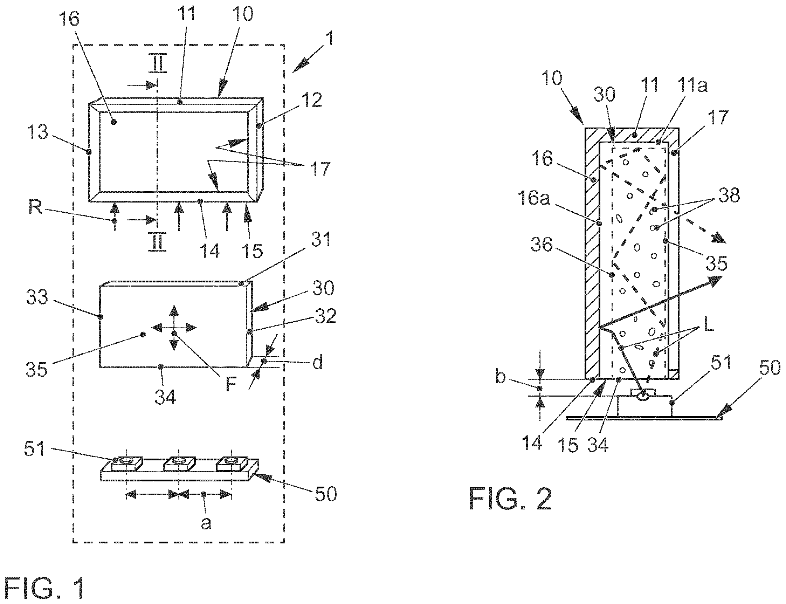

Zunächst wird auf die Fig. 1 und 2 Bezug genommen. In den Figuren ist ein Lichtmodul 1 in Explosionsdarstellung ersichtlich, welches ein rahmenartiges Bauteil 10, einen darin aufgenommenen, flächigen Lichtkörper 30 und eine Platine 50 mit Leuchtmitteln 51 umfasst. Das rahmenartige Bauteil 10 weist einen rechteckförmigen Umriss auf, welcher durch Seitenwände 11, 12, 13 und 14 gebildet wird. Die Seitenwände 11 bis 14 sind durch eine Rückwand 16 einstückig miteinander verbunden. Der Rückwand 16 gegenüberliegend ist eine Öffnung 17 vorhanden, welche vorzugsweise nahezu dem Umriss des Bauteils 10 entspricht.

Die in der Figur untere Seitenwand 14 ist mit einer im Umriss rechteckförmigen Öffnung 15 versehen. Durch die Öffnung 15 kann der flächige Lichtkörper 30 in einer Einschubrichtung R in das rahmenartige Bauteil 10 hineingeschoben werden. Innen kann das Bauteil 10 zusätzlich nicht näher dargestellte Führungs- und/oder Haltemittel für den Lichtkörper 30 aufweisen.

Der Lichtkörper 30 weist, wie das Bauteil 10, einen rechteckförmigen Umriss auf und ist flächig ausgebildet. Er weist eine Flächenerstreckung F auf, die in jeder Richtung um ein Mehrfaches größer ist als seine Dicke d.

Die Abmessungen des Lichtkörpers 30 sind derart bemessen, dass er in seiner Montageposition das rahmenartige Bauteil 10 im Wesentlichen ausfüllt.

Der Lichtkörper 30 weist Seitenflächen 31, 32, 33 und 34 auf. Diese Seitenflächen umgeben eine Lichtaustrittsfläche 35. Die Lichtaustrittsfläche 35 liegt einer rückseitigen Fläche 36 gegenüber. Die Abmessungen des rahmenartigen Bauteils 10 und des Lichtkörpers 30 sind vorzugsweise so gewählt, dass der Lichtkörper 30 nach dem Einschieben in das Bauteil 10 sicher in diesem gehalten wird. Alternativ ist auch eine nicht näher dargestellte Verrastung denkbar.

Der Lichtkörper 30 ist als Lichtleiter ausgebildet und weist einen Transmissionsgrad (eine Lichtdurchlässigkeit) in einem Bereich von etwa 85 Prozent bis etwa 95 Prozent auf. Besonders bevorzugt beträgt der Transmissionsgrad in etwa 92 Prozent.

Die nur leichte Streueigenschaft des Lichtkörpers 30 wird durch lichtstreuende Störstellen 38 verursacht, die verteilt im Lichtkörper 30 angeordnet sind. Die lichtstreuenden Störstellen 38 können bei der Herstellung als Störpartikel in den Lichtkörper 30 eingebracht worden sein. Es ist alternativ auch denkbar die lichtstreuenden Störstellen über eine Laserbearbeitung in den Lichtkörper 30 einzubringen.

Das rahmenartige Bauteil 10 ist innen reflektierend oder diffus rückstreuend ausgebildet.

Hierzu kann eine innenliegende Oberfläche 16a der Rückwand 16 reflektierend oder diffus streuend ausgebildet sein. Dies kann beispielsweise durch eine weiße oder auch rote Beschichtung realisiert werden. In gleicher Weise kann eine innenliegende Oberfläche 11a der Seitenwand 11 ausgebildet sein.

Die Farbe der außenliegenden Oberflächen des rahmenartigen Bauteils 10 ist vorzugsweise lichtdicht ausgebildet. Sie kann beispielsweise schwarz sein. Andere Farben sind denkbar.

Die bereits erwähnte Platine 50 mit den als Leuchtdioden (LEDs) ausgebildeten Leuchtmitteln 51 ist in einem dichten Abstand b unterhalb der Seitenwand 14 angeordnet.

Der Abstand b beträgt vorzugsweise in etwa 10 Millimeter. Des Weiteren ist ersichtlich, dass die Leuchtmittel 51 einen gegenseitigen Abstand a aufweisen, der im Ausführungsbeispiel bevorzugt bei etwa 5 Millimeter liegt.

Der Lichtkörper 30 ist bevorzugt rot eingefärbt. Er kann beispielsweise aus PMMA (Polymethylmethacrylat) oder auch aus PC (Polycarbonat) bestehen.

Die Ausbildung des Bauteils 10 und des Lichtkörpers 30 führen dazu, dass über die Leuchtmittel 51 in den Lichtkörper 30 eingekoppelte Lichtstrahlen L an den lichtstreuenden Störstellen 38 "hängen bleiben" beziehungsweise diffus gestreut werden. Dies trägt zu einer homogenen Ausleuchtung des Lichtkörpers 38 bei.

Lichtstrahlen L, welche auf die innenliegenden Oberflächen 16a oder 11a auftreffen, werden in Richtung des Lichtkörpers 30 zurückreflektiert beziehungsweise diffus rückgestreut. Hierdurch wird ein wesentlicher Beitrag zur Erzielung einer homogenen Lichtabstrahlung des Lichtmoduls 1 geleistet. Allerdings wird durch die besagten Störstellen 38 dieser Effekt noch optimiert.

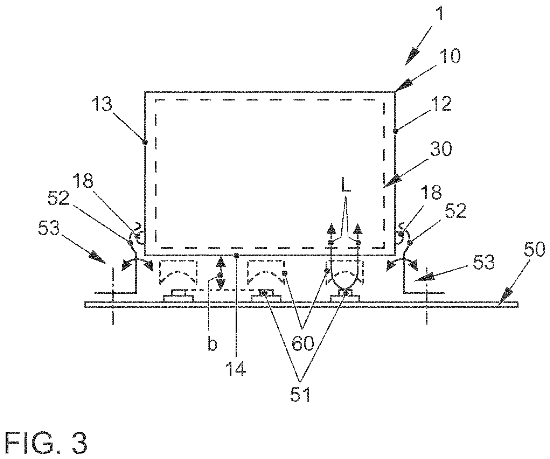

Anhand der Fig. 3 ist nun ersichtlich, wie das Lichtmodul 1 bevorzugt montiert sein kann. So sind auf der Platine 50 winkelartige Halterungen 53 vorhanden, welche mit der Platine 50 verbunden, vorzugsweise verschraubt oder verklebt sind.

Das rahmenartige Bauteil 10 weist an seinen gegenüberliegenden Seitenwänden 12, 13 jeweils hervorstehende Rastmittel 18 auf. Die Rastmittel 18 greifen rastend in Gegenrastmittel 52 der federnd auslenkbaren Halterungen 53 ein.

Des Weiteren sind zwischen der unteren Seitenwandung 14 des Bauteils 10 und den Leuchtmitteln 51 jeweils Sammeloptiken 60 gestrichelt angedeutet. Diese sind optional und tragen dazu bei, dass von den Leuchtmitteln 51 ausgesendete Lichtstrahlen L "eingesammelt" und in Richtung des Lichtkörpers 30 ausgerichtet werden.

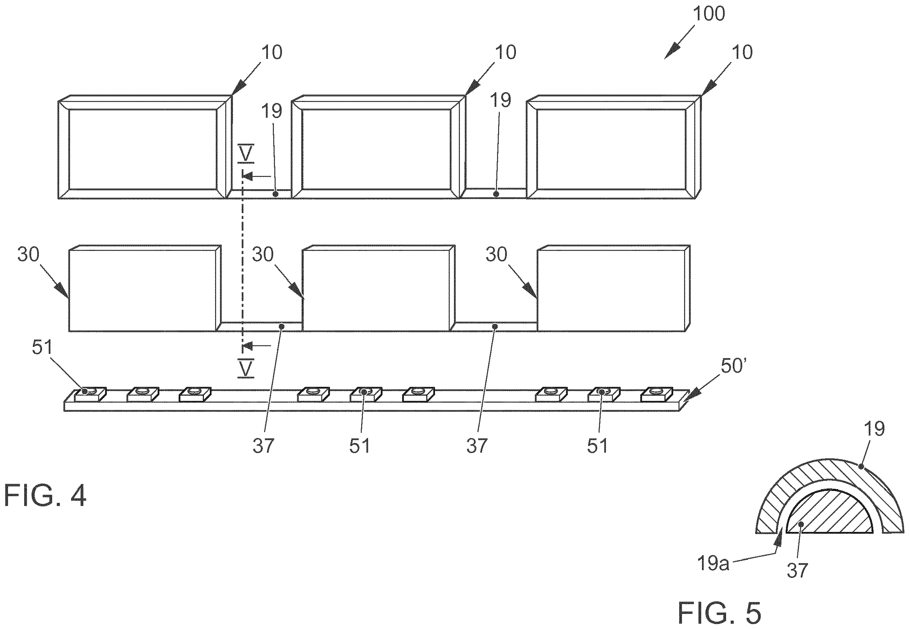

Der Fig. 4 ist eine Lichteinheit 100 zu entnehmen, welche aus drei Lichtmodulen (wie beschrieben) besteht.

So sind zum einen drei rahmenartige Bauteile 10 vorhanden, welche jeweils über ein stegartiges Verbindungselement 19 einstückig miteinander verbunden sind. Auf der anderen Seite sind drei Lichtkörper 30 jeweils über ein stegartiges Verbindungselement 37 einstückig miteinander verbunden.

Die Bauteile 10, wie auch die Lichtkörper 30, können also auf einfache Weise in einem Arbeitsgang, vorzugsweise jeweils in einem Spritzgusswerkzeug hergestellt werden.

Zur Erleichterung der Montage weist jedes der Verbindungselemente 19 im Querschnitt eine gewölbte Form auf, so dass ein halbkreisartiger Aufnahmeraum 19a geschaffen wird. Der Aufnahmeraum 19a seinerseits dient bei der Montage zur Aufnahme des im Querschnitt halbkreisartig ausgebildeten Verbindungselementes 37 (vergleiche Fig. 5).

Schließlich ist eine Platine 50' vorhanden, welche entsprechend länger ausgebildet ist als die Platine 50 (vgl. Fig. 1) und jeweils mehrere, vorzugsweise drei Leuchtmittel 51 aufnimmt, die den Lichtkörpern 30 jeweils zugeordnet sind.

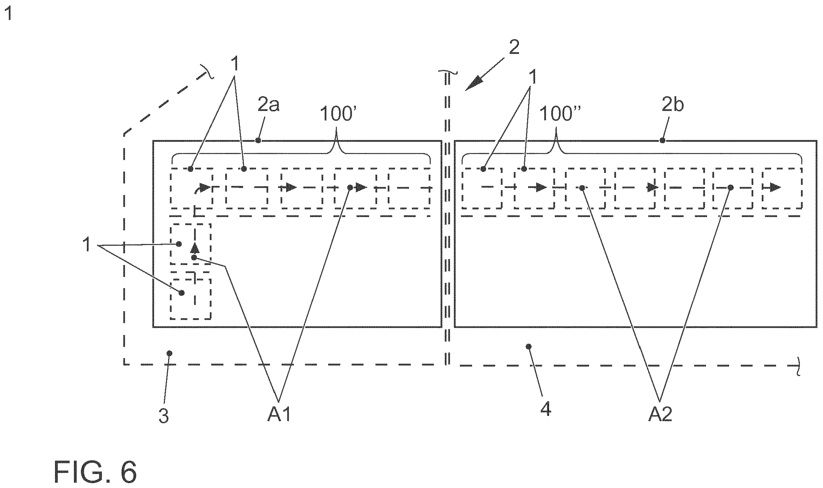

Anhand der Fig. 6 ist dargestellt, dass die Lichtmodule 1 oder aus diesen bestehende Lichteinheiten 100' beziehungsweise 100" auch in einer Beleuchtungsvorrichtung 2 eines gestrichelt angedeuteten Kraftfahrzeugs verwendet werden können. Die Beleuchtungsvorrichtung 2 kann eine Heckbeleuchtung eines Kraftfahrzeugs sein, wobei ein karosserieseitiger Teil 2a der Beleuchtungsvorrichtung 2 in eine Karosserie 3 und ein heckklappenseitiger Teil 2b der Beleuchtungsvorrichtung 2 in eine Heckklappe 4 eines Kraftfahrzeugs eingebaut werden kann.

Über eine hier nicht näher dargestellte Steuereinheit ist es denkbar, die einzelnen Lichtmodule 1 nacheinander derart anzusteuern, dass lichttechnische Animationen A1 beziehungsweise A2 (vergleichen Pfeilrichtung) erzeugt werden. Dies ist beispielsweise zur Realisierung einer sogenannten Coming-Home- oder Leaving-Home-Funktion denkbar.

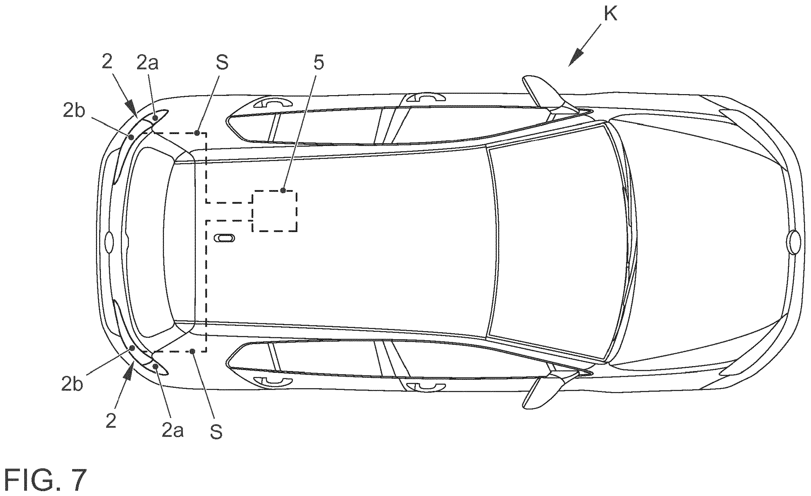

Schließlich zeigt die Fig. 7 ein Kraftfahrzeug K, in welchem zwei als Heckleuchten dienende Beleuchtungsvorrichtungen 2 verbaut sind. Eine Steuereinheit 5 dient über Signal- und Steuerleitungen S zur Ansteuerung der Beleuchtungsvorrichtungen 2.

### Bezugszeichenliste

- 1: Lichtmodul
- 2: Beleuchtungsvorrichtung
- 2a: karosserieseitiger Teil der Beleuchtungsvorrichtung
- 2b: heckklappenseitiger Teil der Beleuchtungsvorrichtung
- 3: Karosserie
- 4: Heckklappe
- 5: Steuereinheit
- 10: Abdeckung, rahmenartiges Bauteil
- 11: Seitenwand
- 11a: innenliegende Oberfläche
- 12: Seitenwand
- 13: Seitenwand
- 14: Seitenwand
- 15: Öffnung
- 16: Rückwand
- 16a: innenliegende Oberfläche
- 17: Öffnung
- 18: Rastmittel
- 19: stegartiges Verbindungselement
- 19a: Aufnahmeraum
- 30: flächiger Lichtkörper
- 31: Seitenfläche
- 32: Seitenfläche
- 33: Seitenfläche
- 34: Seitenfläche
- 35: Lichtaustrittsfläche
- 36: rückseitige Fläche
- 37: stegartiges Verbindungselement
- 38: lichtstreuende Störstellen
- 50, 50': Platine
- 51: Leuchtmittel, LEDs
- 52: Gegenrastmittel
- 53: Halterung
- 60: Sammeloptik
- 100, 100', 100": Lichteinheiten

- a: Abstand
- A1, A2: Animationen
- b: Abstand
- d: Dicke
- F: Flächenerstreckung
- L: Lichtstrahlen
- R: Einschubrichtung
- S: Signal- und Steuerleitung

## Patentansprüche

1. Lichteinheit (100, 100', 100") zur Verwendung in einer Beleuchtungsvorrichtung (2; 2a, 2b) für ein Kraftfahrzeug (K), mit wenigstens einem Lichtmodul (1) mit einem flächigen, als Lichtleiter ausgebildeten Lichtkörper (30) und wenigstens einem Leuchtmittel (51), dessen Lichtstrahlen (L) in eine Seitenfläche (34) des Lichtkörpers (30) einkoppelbar sind oder eingekoppelt werden, wobei die Lichtstrahlen (L) über eine von Seitenflächen (31-34) des Lichtkörpers (30) umgebene Lichtaustrittsfläche (35) nach außen austreten können oder austreten und wobei zumindest ein Teil der Seitenflächen (31-34) und eine der Lichtaustrittsfläche (35) gegenüberliegende, rückseitige Fläche (36) durch eine reflektierende oder diffus rückstreuende Abdeckung (10) abgedeckt wird, wobei die Abdeckung (10) des einen Lichtkörpers (30) durch ein rahmenartiges Bauteil (10) mit einer Rückwand (16) und einer der Rückwand (16) gegenüberliegenden Öffnung (17) gebildet wird, wobei die Abmessungen des Lichtkörpers (30) derart bemessen sind, dass er in seiner Montageposition das rahmenartige Bauteil (10) im Wesentlichen ausfüllt, **dadurch gekennzeichnet, dass** eine Seitenwand (14) des rahmenartiges Bauteils (10) eine Öffnung (15) aufweist, durch die der Lichtkörper (30) in das rahmenartige Bauteil (10) seitlich eingebracht ist, wobei das wenigstens eine Leuchtmittel (51) an der die Öffnung (15) aufweisenden Seitenwand (14) des rahmenartigen Bauteils (10) angeordnet ist, wobei der Lichtkörper (30) einen Transmissionsgrad in einem Bereich von etwa 85 % bis etwa 95 % aufweist und wobei die Lichteinheit (100, 100', 100") aus mehreren Lichtmodulen (1) gebildet ist, bei der die rahmenartigen Bauteile (10) einerseits und die flächigen Lichtkörper (30) andererseits jeweils einstückig miteinander verbunden sind und wobei die rahmenartige Bauteile (10) auf einer gemeinsamen Platine (50') befestigt sind, die die den flächigen Lichtkörpern (30) zugeordneten Leuchtmittel (51) trägt.

2. Lichteinheit (100, 100', 100") nach Anspruch 1, **dadurch gekennzeichnet, dass** im jeden Lichtkörper (30) verteilt lichtstreuende Störstellen (38) angeordnet sind

3. Lichteinheit (100, 100', 100") nach Anspruch 2, **dadurch gekennzeichnet, dass** jeder Lichtkörper (30) einen Transmissionsgrad von etwa 92% aufweist.

4. Lichteinheit (100, 100', 100") nach einem der vorhergehenden Ansprüche, **dadurch gekennzeichnet, dass** jedes von wenigstens einem Leuchtmittel (51) in einem Abstand (b) von der Seitenwand (14) angeordnet ist.

5. Lichteinheit (100, 100', 100") nach einem der vorhergehenden Ansprüche, **dadurch gekennzeichnet, dass** jeweils zwischen dem wenigstens einen Leuchtmittel (51) und der Seitenwand (14) wenigstens eine Sammeloptik (60) angeordnet ist.

6. Lichteinheit (100, 100', 100") nach einem der vorhergehenden Ansprüche, **dadurch gekennzeichnet, dass** jeweiliges rahmenartige Bauteil (10) über eine Halterung (53) auf der Platine (50,50') befestigt ist, welche auch jedes von wenigstens einem Leuchtmittel (51) trägt.

7. Lichteinheit (100, 100', 100") nach Anspruch 6, **dadurch gekennzeichnet, dass** jeweils das rahmenartige Bauteil (10) mit der Halterung (53) verrastet ist.

8. Lichteinheit (100, 100', 100") nach einem der vorhergehenden Ansprüche, **dadurch gekennzeichnet, dass** jeweils mehrere als Leuchtdioden ausgebildete Leuchtmittel (51) vorhanden sind, welche einen gegenseitigen Abstand (a) zueinander von mehr als 4,5 mm und weniger als 6,5 mm aufweisen.

9. Beleuchtungsvorrichtung (2; 2a, 2b) für ein Kraftfahrzeug (K), **gekennzeichnet durch** wenigstens eine Lichteinheit (100, 100', 100") nach einem der Ansprüche 1 bis 8.

10. Kraftfahrzeug, **gekennzeichnet durch** wenigstens eine Beleuchtungsvorrichtung (2; 2a, 2b) nach Anspruch 9.

## Claims

1. Light unit (100, 100', 100'') for use in an illumination apparatus (2; 2a, 2b) for a motor vehicle (K), having at least one light module (1) having a two-dimensional light body (30) embodied in the form of a light guide and at least one light-emitting means (51), whose light beams (L) are able to be coupled or are coupled into a side face (34) of the light body (30), wherein the light beams (L) can exit or do exit to the outside via a light exit face (35) that is surrounded by side faces (31-34) of the light body (30) and wherein at least a part of the side faces (31-34) and a rear-side face (36) located opposite the light exit face (35) are covered by a reflective or diffusely back-scattering covering (10), wherein the covering (10) of the one light body (30) is formed by a frame-type component (10) having a rear wall (16) and an opening (17) opposite the rear wall (16), wherein the dimensions of the light body (30) are such that it substantially fills the frame-type component (10) in its mounted position, **characterized in that** a side wall (14) of the frame-type component (10) has an opening (15) through which the light body (30) is brought laterally into the frame-type component (10), wherein the at least one light-emitting means (51) is arranged at the side wall (14) of the frame-type component (10) exhibiting the opening (15), wherein the light body (30) has a transmittance in a range from approximately 85% to approximately 95% and wherein the light unit (100, 100', 100'') is formed from a plurality of light modules (1) in which the frame-type components (10) and also the two-dimensional light bodies (30) are in each case connected to one another to form one piece and wherein the frame-type components (10) are attached to a common printed circuit board (50') carrying the light-emitting means (51) that are assigned to the two-dimensional light bodies (30).

2. Light unit (100, 100', 100'') according to Claim 1, **characterized in that** light-scattering defects (38) are arranged distributed in each light body (30).

3. Light unit (100, 100', 100'') according to Claim 2, **characterized in that** each light body (30) has a transmittance of approximately 92%.

4. Light unit (100, 100', 100'') according to one of the preceding claims, **characterized in that** each of at least one light-emitting means (51) is arranged at a distance (b) from the side wall (14).

5. Light unit (100, 100', 100'') according to one of the preceding claims, **characterized in that** at least one converging optical unit (60) is arranged in each case between the at least one light-emitting means (51) and the side wall (14).

6. Light unit (100, 100', 100'') according to one of the preceding claims, **characterized in that** each frame-type component (10) is attached via a holder (53) to the printed circuit board (50, 50') that also carries each of at least one light-emitting means (51).

7. Light unit (100, 100', 100'') according to Claim 6, **characterized in that** in each case the frame-type component (10) is latched to the holder (53).

8. Light unit (100, 100', 100'') according to one of the preceding claims, **characterized in that** in each case a plurality of light-emitting means (51) in the form of light-emitting diodes are present, which have a mutual spacing (a) from one another of more than 4.5 mm and less than 6.5 mm.

9. Illumination apparatus (2; 2a, 2b) for a motor vehicle (K), **characterized by** at least one light unit (100, 100', 100'') according to one of Claims 1 to 8.

10. Motor vehicle, **characterized by** at least one illumination apparatus (2; 2a, 2b) according to Claim 9.

## Revendications

1. Unité lumineuse (100, 100', 100'') destinée à être utilisée dans un dispositif d'éclairage (2 ; 2a, 2b) destiné à un véhicule automobile (K), ladite unité lumineuse comprenant au moins un module lumineux (1) pourvu d'un corps lumineux (30) sensiblement bidimensionnel conçu comme guide de lumière et au moins un moyen luminescent (51) dont les rayons lumineux (L) sont injectés par couplage ou peuvent être injectés par couplage dans une surface latérale (34) du corps lumineux (30), les rayons lumineux (L) sortant ou pouvant sortir vers l'extérieur par le biais d'une surface de sortie de lumière (35) entourée de surfaces latérales (31-34) du corps lumineux (30) et au moins une partie des surfaces latérales (31-34) et une surface arrière (36), opposée à la surface de sortie de lumière (35), étant recouvertes par un couvercle réfléchissant ou à rétro-dispersion diffuse (10), le couvercle (10) d'un corps lumineux (30) étant formé par un composant (10) en forme de cadre pourvu d'une paroi arrière (16) et d'une ouverture (17) opposée à la paroi arrière (16), les dimensions du corps lumineux (30) étant conçues de manière que, dans sa position de montage, celui-ci remplisse sensiblement le composant (10) en forme de cadre, **caractérisée en ce qu'**une paroi latérale (14) du composant (10) en forme de cadre comporte une ouverture (15) par laquelle le corps lumineux (30) est inséré latéralement dans le composant (10) en forme de cadre, l'au moins un moyen luminescent (51) étant disposé sur la paroi latérale (14) du composant (10) en forme de cadre qui comporte l'ouverture (15), le corps lumineux (30) ayant un facteur de transmission dans une gamme d'environ 85 % à environ 95 % et l'unité lumineuse (100, 100', 100'') étant formée de plusieurs modules lumineux (1) dans lesquels les composants (10) en forme de cadre d'une part et les corps lumineux (30) sensiblement bidimensionnels d'autre part sont reliés respectivement entre eux d'une seule pièce et les composants (10) en forme de cadre étant fixés à une carte de circuit imprimé commune (50') qui porte les moyens luminescents (51) associés aux corps lumineux (30) sensiblement bidimensionnels.

2. Unité lumineuse (100, 100', 100'') selon la revendication 1, **caractérisée en ce que** des impuretés photo-dispersantes (38) sont disposées de manière répartie dans chaque corps lumineux (30).

3. Unité lumineuse (100, 100', 100'') selon la revendication 2, **caractérisée en ce que** chaque corps lumineux (30) a un facteur de transmission d'environ 92 %.

4. Unité lumineuse (100, 100', 100'') selon l'une des revendications précédentes, **caractérisée en ce que** chacun de l'au moins un moyen luminescent (51) est disposé à une distance (b) de la paroi latérale (14).

5. Unité lumineuse (100, 100', 100'') selon l'une des revendications précédentes, **caractérisée en ce qu'**au moins une optique collectrice (60) est disposée entre l'au moins un moyen luminescent (51) et la paroi latérale (14).

6. Unité lumineuse (100, 100', 100'') selon l'une des revendications précédentes, **caractérisée en ce que** chaque composant (10) en forme de cadre est fixé par le biais d'un support (53) à la carte de circuit imprimé (50, 50') qui porte également chacun de l'au moins un moyen luminescent (51).

7. Unité lumineuse (100, 100', 100'') selon la revendication 6, **caractérisée en ce que** le composant (10) en forme de cadre est à chaque fois encliqueté au support (53).

8. Unité lumineuse (100, 100', 100'') selon l'une des revendications précédentes, **caractérisée en ce que** plusieurs moyens luminescents (51) conçus sous la forme de diodes électroluminescentes sont prévus qui sont à une distance mutuelle (a) les uns des autres supérieure à 4,5 mm et inférieure à 6,5 mm.

9. Dispositif d'éclairage (2 ; 2a, 2b) destiné à un véhicule automobile (K), **caractérisé par** au moins une unité lumineuse (100, 100', 100") selon l'une des revendications 1 à 8.

10. Véhicule automobile, **caractérisé par** au moins un dispositif d'éclairage (2 ; 2a, 2b) selon la revendication 9.
